# EUROPEAN PATENT SPECIFICATION

(11) **EP 3 895 887 B1**
(45) Date of publication and mention of the grant of the patent: **25.10.2023**
(21) Application number: 21167315.7
(22) Date of filing: 08.04.2021
(51) Int. Cl.: B32B 5/02, B32B 5/10, B32B 5/20, B32B 5/24, B32B 27/12, B32B 27/40, D06N 3/00

(54) **SEWABLE THERMOPLASTIC ELASTOMER ARTIFICIAL LEATHER**
NÄHBARES KUNSTLEDER AUS THERMOPLASTISCHEM ELASTOMER
CUIR ARTIFICIEL ÉLASTOMÈRE THERMOPLASTIQUE POUVANT ÊTRE COUSU

(30) Priority: 13.04.2020 CN 202020535410 U
(43) Date of publication of application: 20.10.2021
(73) Proprietor: BENECKE - CHANGSHUN AUTO TRIM (ZHANGJIAGANG) CO., LTD., Zhangjiagang, Jiangsu 215632 (CN)
(72) Inventor: Li, Shuai, Shanghai 200082 (CN); Liu, Haiyang, Shanghai 200082 (CN)
(74) Representative: Continental Corporation

(56) References cited:
- WO-A1-91/18741
- CN-U- 209 920 695
- JP-A- 2007 130 823
- JP-B2- 3 067 336
- US-A1- 2010 075 559

## Description

### [Technical Field]

The present invention relates to a sewable thermoplastic elastomer artificial leather, which comprises a base fabric layer and can be used as an automobile seat surface material or door panel surface material, etc. in the automotive field.

### [Background art]

Artificial leather is being used more and more as a surface material in fields such as automobiles and home decorating. Common artificial leathers include thermoplastic polyolefin (referred to hereinbelow as TPO) artificial leather, polyvinyl chloride (referred to hereinbelow as PVC) artificial leather and polyurethane (referred to hereinbelow as PU) artificial leather, etc. Taking the automotive field as an example, in the prior art, PVC artificial surface material and PU artificial surface material are joined to a base fabric to form PVC artificial leather and PU artificial leather, which can be used as a surface material for seats. When seats are covered with PVC artificial leather and PU artificial leather, the artificial leather can be sewn in order to cover the seats effectively. However, in the prior art, there is no precedent for joining a TPO artificial surface material to a base fabric; the TPO artificial surface material is generally joined to sponge, because it cannot be sewn, so cannot be used as a surface material for components requiring to be sewn such as seats. For this reason, our company is currently researching and developing ways of joining a TPO artificial surface material to a base fabric in order to form a new TPO artificial leather suitable for sewing. One very simple method was proposed first, specifically using glue to bond the TPO artificial surface material to the base fabric. However, it was found through experiment that the TPO artificial leather formed using glue had disadvantages such as poor feel, a high VOC level, a high cost, and poor adhesion.

JP3067336 B describes an artificial leather, which is prepared from an ultrafine acrylic fiber web and a strongly twisted knitted fabric. In the preparation of the artificial leather, the ultrafine acrylic fiber web is attached to the strongly twisted knitted fabric and entangling treatment, which is effected by needle punching of fibers of the fiber web through the knitted fabric. Thereafter, the acrylic fiber web is treated with a silicone adhesion promoter and a polymer elastic body is applied thereon to provide an elastomeric top layer.

The present invention hopes to propose a novel technical solution to solve the abovementioned technical problems.

### [Summary of the invention]

The technical problem to be solved by the present invention is: to provide a thermoplastic elastomer artificial leather that can be sewn, with good adhesion between a base fabric layer and a thermoplastic elastomer surface layer of the thermoplastic elastomer artificial leather.

To solve the abovementioned technical problem, the invention model can employ the following technical solution: a sewable thermoplastic elastomer artificial leather, comprising a base fabric layer and a thermoplastic elastomer surface layer, the base fabric layer comprising a number of yarns, wherein the yarn has a base body and hairs extending from the base body into the thermoplastic elastomer surface layer, the yarn comprises long filaments and short fiber yarns which are joined together by twisting, and based on the total number of the long filaments and the short fiber yarns, the yarn contains the short fiber yarns in a proportion of 30% - 60%.

In a preferred embodiment, the yarn contains the short fiber yarns in a proportion of 40% - 60%.

In a preferred embodiment, the short fiber yarns are formed from short fibers by spinning, the short fibers being natural short fibers or synthetic staple fibers.

In a preferred embodiment, the short fiber yarns are formed from short fibers by spinning, the short fibers being a non-polar material.

In a preferred embodiment, the short fibers are polyester fibers.

In a preferred embodiment, the short fibers are 15 - 24 mm in length.

In a preferred embodiment, the long filaments are formed from synthetic fibers or renewable fibers or inorganic fibers by spinneret spinning.

In a preferred embodiment, the long filaments and the short fiber yarns are joined together by Z-twisting or S-twisting.

In a preferred embodiment, the thickness of the yarn is 10 - 32 tex.

In a preferred embodiment, the thickness of the yarn is 11 - 20 tex.

In a preferred embodiment, the hairs are 3 - 8 mm in length.

In a preferred embodiment, the hairs are end hairs, loop hairs or floating hairs.

In a preferred embodiment, the thermoplastic elastomer surface layer and the base fabric layer are bonded together by a hot-press joining process.

Compared with the prior art, the present invention has the following beneficial effects; in the present invention, the base fabric layer formed of the yarn containing the long filaments and the short fiber yarns is joined to the thermoplastic elastomer surface layer; the long filaments and the short fiber yarns are joined by twisting to form the yarn, and in the process of twisting, some of the short fibers on the short fiber yarns project from the surface of the base body of the yarn to form hairs configured to enter the thermoplastic elastomer surface layer; in this way, adhesion between the base fabric layer and the thermoplastic elastomer surface layer is increased.

### [Brief Description of the Drawings]

Fig. 1 is a schematic drawing of the sewable thermoplastic elastomer artificial leather in a preferred embodiment of the present invention.
Fig. 2 is a schematic drawing of the base fabric layer of the sewable thermoplastic elastomer artificial leather shown in Fig. 1.
Fig. 3 is a schematic drawing of the yarn of the base fabric layer shown in Fig. 2.
Fig. 5 is a schematic drawing of the short fiber yarn of the yarn shown in Fig. 3.

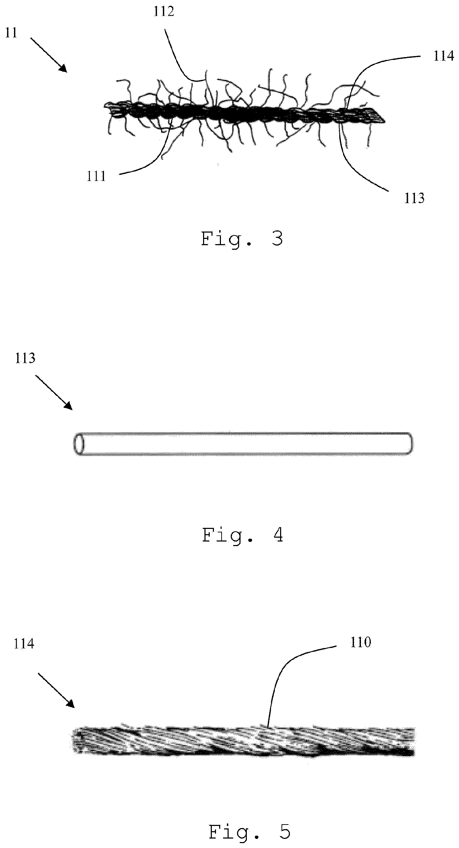

Fig. 4 is a schematic drawing of the long filament of the yarn shown in Fig. 3.

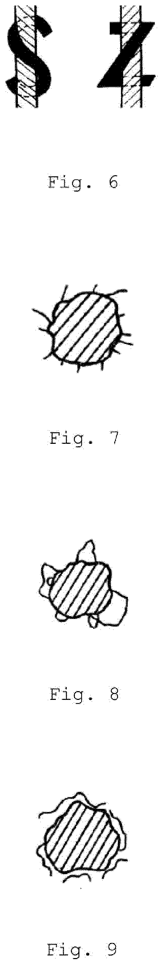

Fig. 6 is a schematic drawing of two methods of twisting the short fiber yarn shown in Fig. 5 and the long filament shown in Fig. 4.
Fig. 7 is a cross-sectional schematic drawing of the yarn shown in Fig. 3, wherein the hairs of the yarn are end hairs.
Figs. 8 and 9 are schematic drawings of cross sections of yarns different from that shown in Fig. 7, the differences being that in Fig. 8 the hairs of the yarn are loop hairs, and in Fig. 9 the hairs of the yarn are floating hairs.

### [Detailed Description of Embodiments]

The technical solution in embodiments of the present invention is explained and illustrated below with reference to the accompanying drawings of embodiments of the present invention. However, the embodiments below are merely preferred embodiments, not all embodiments, of the present invention. All other embodiments obtained by those skilled in the art on the basis of embodiments in the present invention without expending creative effort are included in the scope of protection of the present invention.

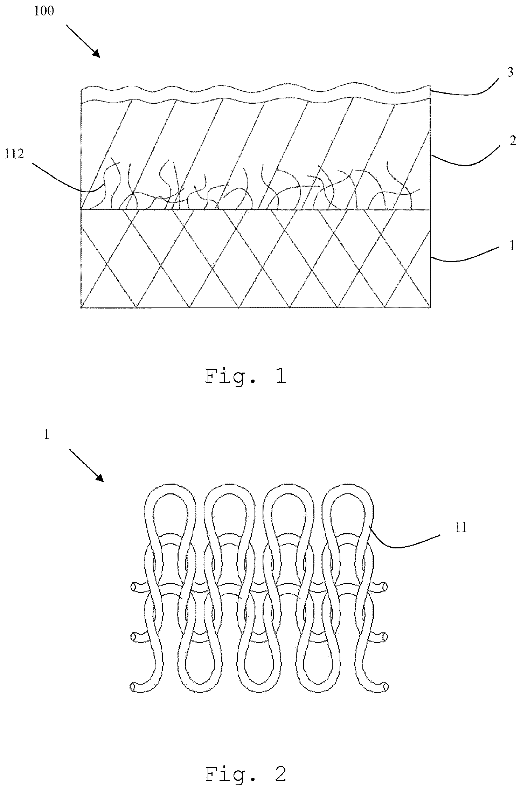

Referring to Fig. 1, the present invention provides a sewable thermoplastic elastomer artificial leather 100, comprising a base fabric layer 1, a thermoplastic elastomer surface layer 2 and a paint layer 3. The base fabric layer 1 may be a double-sided fabric, a satin fabric or a double pique mesh fabric, etc. The thermoplastic elastomer surface layer 2 may be a thermoplastic polyolefin elastomer surface layer or a thermoplastic rubber elastomer surface layer; thermoplastic polyolefin elastomer surface layer formulations mainly include polyethylene, polypropylene and polyolefin elastomers, and thermoplastic rubber elastomer surface layer formulations mainly include polyethylene, polypropylene and thermoplastic vulcanized rubber. The base fabric layer 1 and the thermoplastic elastomer surface layer 2 are preferably bonded together by a hot-press joining process. The formula of the paint layer 3 may be conventionally selected according to actual functional requirements; of course, in some embodiments, the paint layer 3 may be omitted. The base fabric layer 1 is described in detail below.

Referring to Figs. 1 - 3, the base fabric layer 1 comprises a number of yarns 11, and the base fabric layer 1 is formed from the yarns 11 in a woven, knitted or non-woven fashion. The thickness of the yarn 11 is 10 - 32 tex, preferably 11 - 20 tex. If the yarn 11 is too thin, then the contact surface of the yarn 11 will be insufficient, with poor adhesion to the thermoplastic elastomer surface layer 2. If the yarn 11 is too thick, then a surface of the thermoplastic elastomer artificial leather 100 formed will have the texture of the yarn 11, and this will affect the appearance of the product; moreover, the product will be harder, and this will affect the feel. Furthermore, the yarn 11 has a base body 111, and hairs 112 extending from the base body 111 into the thermoplastic elastomer surface layer 2. The hairs 112 are 3 - 8 mm in length; referring to Figs. 7 - 9, the hairs 112 may be end hairs, loop hairs or floating hairs, but are preferably end hairs.

Referring to Figs. 3 - 5 in detail, the yarn 11 comprises long filaments 113 and short fiber yarns 114 which are joined together by twisting. The long filaments 113 are formed from synthetic fibers or renewable fibers or inorganic fibers by melting, extrusion and spinneret spinning; the material of the long filaments 113 is preferably polyester fiber. The short fiber yarns 114 are formed from short fibers 110 by spinning. The short fibers 110 may be natural short fibers or synthetic staple fibers, e.g. plant fibers, animal fibers, mineral fibers or polyester fibers, etc. The short fibers 110 are preferably a non-polar material; non-polar materials can bond very well to the thermoplastic elastomer surface layer 2. The spinning may be ring spinning, open-end spinning or compact-siro spinning, etc. The short fibers 110 are 15 - 24 mm in length. If the short fibers 110 are too short, then the short fiber yarns 114 are of low strength, and cannot be woven into fabric; if the short fibers 110 are too long, then the short fibers 110 easily fall off, and have poor strength, so adhesion to the thermoplastic elastomer surface layer 2 cannot be guaranteed. Based on the total number of the long filaments 113 and the short fiber yarns 114, the yarn 11 contains the short fiber yarns 114 in a proportion of 30% - 60%, preferably 40% - 60%. Referring to Fig. 6, the long filaments 113 and the short fiber yarns 114 are joined together by Z-twisting or S-twisting. In an actual manufacturing process, a single strand of the long filament 113 and a single strand of the short fiber yarn 114 can be twisted together first, and then combined; or a number of the long filaments 113 and a number of the short fiber yarns 114 can be combined first, and then twisted together.

Three examples and two comparative examples are given below:

### Example 1

The steps for preparing TPO artificial leather are as follows:
Step 1: preparation of aqueous polyurethane coating
   60 parts of an aqueous polyurethane dispersion, 1 part of silica and 25 parts of water were mixed and stirred until uniform, to obtain a first mixed solution;
   1 part of a polyurethane thickener was added to the first mixed solution, which was then thoroughly stirred until uniform, to obtain a second mixed solution;
   0.2 part of an isocyanate curing agent was added to the second mixed solution, which was then thoroughly stirred until uniform, to obtain an aqueous polyurethane coating.
Step 2: preparation of TPO surface layer
   20 parts by weight of linear low-density polyethylene, 20 parts by weight of ethylene-propylene random copolymer, 30 parts by weight of thermoplastic vulcanized rubber, 20 parts by weight of ethylene/α-olefin copolymer elastomer and 10 parts by weight of olefin tackifier resin as starting materials were extruded to form a TPO surface layer, wherein the thermoplastic vulcanized rubber had a Shore hardness of 60 A, and the ethylene/α-olefin copolymer elastomer had a Shore hardness of 63 A.
Step 3: preparation of base fabric layer
   Polyester fibers having an approximate length of 20 mm were selected as short fibers, and underwent compact-siro spinning to form a number of short fiber yarns;
   polyester fibers as starting materials underwent melting, extrusion and spinneret spinning to form a number of long filaments;
   a number of the short fiber yarns and a number of the long filaments were combined in the ratio of 1 : 1, and underwent Z-twisting to form a yarn;
   a number of the yarns were knitted to form a double-sided knitted fabric.
Step 4: joining the TPO surface layer and base fabric layer
   A hot-press joining process was used for hot-press joining of the TPO surface layer obtained in step 2 and the double-sided knitted fabric obtained in step 3, to form a TPO semi-finished leather.
Step 5: painting
   The TPO surface layer of the TPO semi-finished leather obtained in step 4 was evenly coated with the aqueous polyurethane coating obtained in step 1, then oven-dried to obtain the final TPO artificial leather.

### Examples 2 - 3 and comparative examples 1 - 2

The TPO artificial leathers in examples 2 - 3 and comparative examples 1 - 2 had substantially the same structure, formula and manufacturing process as the TPO artificial leather in example 1, but differed therefrom in terms of the content of the short fiber yarns; the specific contents are shown in Table 1.

### Testing of TPO artificial leathers in examples 1 - 3 and comparative examples 1 - 2

The adhesion and elongation of the artificial leathers of examples 1 - 3 and comparative examples 1 - 2 were tested according to test standards GMW3220 and GMW3010; the test results are shown in Table 1.

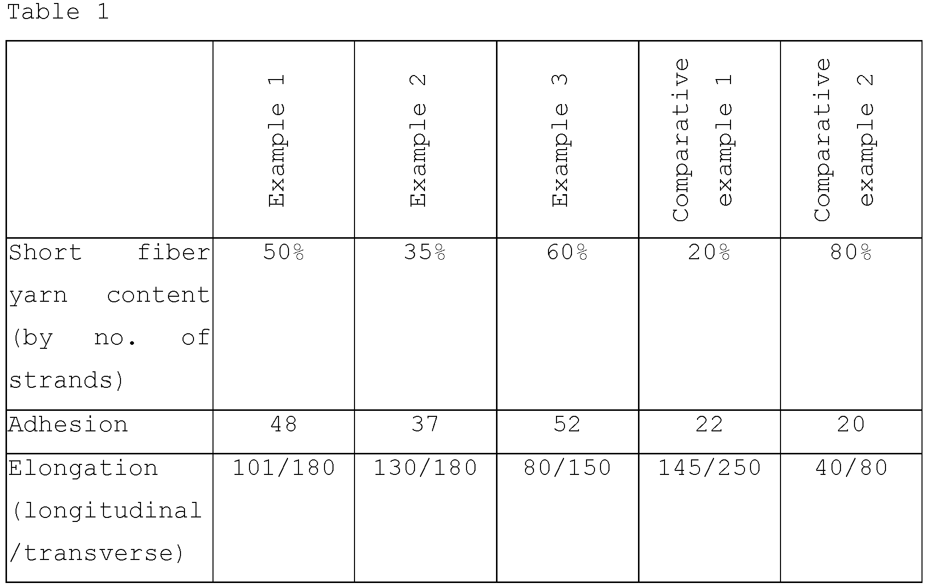

It can be seen from Table 1 that when the short fiber yarn content was 30% - 60%, the TPO artificial leather obtained had good adhesion and good elongation, but when the short fiber yarn content was less than 30%, the TPO artificial leather obtained had very poor adhesion, and when the short fiber yarn content was greater than 60%, the TPO artificial leather obtained had very poor adhesion and very poor elongation.

In summary, in the present invention, the base fabric layer 1 formed of the yarn 11 containing the long filaments 113 and the short fiber yarns 114 is joined to the thermoplastic elastomer surface layer 2; the long filaments 113 and the short fiber yarns 114 are joined by twisting to form the yarn 11, and in the process of twisting, some of the short fibers 110 on the short fiber yarns 114 project from the surface of the base body 111 of the yarn 11 to form hairs 112 configured to enter the thermoplastic elastomer surface layer 2; in this way, adhesion between the base fabric layer 1 and the thermoplastic elastomer surface layer 2 is increased. If the content of the short fiber yarns 114 is too low, then adhesion between the base fabric layer 1 and the thermoplastic elastomer surface layer 2 cannot be guaranteed; if the content of the short fiber yarns 114 is too high, it will likewise not be possible to guarantee adhesion between the base fabric layer 1 and the thermoplastic elastomer surface layer 2, because the short fiber yarns 114 are not of high strength and easily break.

It will be understood that in the absence of conflict, the above examples of the present invention may be combined with each other to obtain further examples. The various specific technical features described in the particular embodiments above may, in the absence of contradiction, be combined in any suitable manner.

In the description of the present invention, it must be understood that directional or positional relationships indicated by the terms "center", "upper", "lower", "vertical", "horizontal", "top", "bottom", "inner", "outer", "clockwise" and "anticlockwise", etc. are based on directional or positional relationships shown in the drawings, and are merely intended to facilitate description of the present invention and simplify description; they do not indicate or imply that the apparatus or element referred to must have a specific direction and be constructed and operated in a specific direction, and therefore cannot be interpreted as restrictions on the present invention. In addition, the terms "first" and "second" are merely used for descriptive purposes, and cannot be interpreted as indicating or implying relative importance or implicitly specifying the quantity of the technical feature indicated. Thus, a feature for which "first" and "second" are defined may explicitly or implicitly include one or more of the feature. In the description of the present invention, the meaning of "multiple" is two or more, unless otherwise clearly and specifically defined.

In the present invention, unless otherwise clearly specified and defined, terms such as "mounted", "connected together", "connected" and "fixed", etc. should be interpreted in a broad sense, e.g. they may indicate a fixed connection, or a removable connection, or an integral connection; they may indicate a mechanical connection, or an electrical connection; they may indicate a direct connection, or an indirect connection via an intermediate medium, or internal communication between two elements. Those skilled in the art can interpret the specific meaning of the abovementioned terms in the present invention according to particular circumstances.

## Claims

1. A sewable thermoplastic elastomer artificial leather (100), comprising a base fabric layer (1) and a thermoplastic elastomer surface layer (2), the base fabric layer (1) comprising a number of yarns (11), wherein the yarn (11) has a base body (111) and hairs extending from the base body (112) into the thermoplastic elastomer surface layer (2), the yarn comprises long filaments and short fiber yarns which are joined together by twisting, and based on the total number of the long filaments (113) and the short fiber yarns (114), the yarn (11) contains the short fiber yarns (114) in a proportion of 30% - 60%.

2. The sewable thermoplastic elastomer artificial leather (100) as claimed in claim 1, wherein the yarn (11) contains the short fiber yarns (114) in a proportion of 40% - 60%.

3. The sewable thermoplastic elastomer artificial leather (100) as claimed in claim 1, wherein the short fiber yarns (114) are formed from short fibers (110) by spinning, the short fibers (110) being natural short fibers or synthetic staple fibers.

4. The sewable thermoplastic elastomer artificial leather (100) as claimed in claim 1, wherein the short fiber yarns (114) are formed from short fibers (110) by spinning, the short fibers (110) being a non-polar material.

5. The sewable thermoplastic elastomer artificial leather (100) as claimed in claim 3 or 4, wherein the short fibers (110) are polyester fibers.

6. The sewable thermoplastic elastomer artificial leather (100) as claimed in any one of claims 3 - 5, wherein the short fibers (110) are 15 - 24 mm in length.

7. The sewable thermoplastic elastomer artificial leather (100) as claimed in claim 1, wherein the long filaments (113) are formed from synthetic fibers or renewable fibers or inorganic fibers by spinneret spinning.

8. The sewable thermoplastic elastomer artificial leather (100) as claimed in claim 1, wherein the long filaments (113) and the short fiber yarns (114) are joined together by Z-twisting or S-twisting.

9. The sewable thermoplastic elastomer artificial leather (100) as claimed in claim 1, wherein the thickness of the yarn (11) is 10 - 32 tex.

10. The sewable thermoplastic elastomer artificial leather (100) as claimed in claim 9, wherein the thickness of the yarn (11) is 11 - 20 tex.

11. The sewable thermoplastic elastomer artificial leather (100) as claimed in claim 1, wherein the hairs (112) are 3 - 8 mm in length.

12. The sewable thermoplastic elastomer artificial leather (100) as claimed in claim 1, wherein the hairs (112) are end hairs, loop hairs or floating hairs.

13. The sewable thermoplastic elastomer artificial leather (100) as claimed in claim 1, wherein the thermoplastic elastomer surface layer (2) and the base fabric layer (1) are bonded together by a hot-press joining process.

## Patentansprüche

1. Nähbares Kunstleder aus thermoplastischem Elastomer (100), umfassend eine Grundgewebeschicht (1) und eine Oberflächenschicht aus thermoplastischem Elastomer (2), wobei die Grundgewebeschicht mehrere Garne (11) umfasst, wobei das Garn (11) einen Grundkörper (111) und Haare, die von dem Grundkörper (112) in die Oberflächenschicht aus thermoplastischem Elastomer (2) verlaufen, aufweist, wobei das Garn lange Filamente und kurzfaserige Garne, die durch Verzwirnen miteinander verbunden sind, umfasst, und bezogen auf die Gesamtzahl der langen Filamente (113) und der kurzfaserigen Garne (114) das Garn die kurzfaserigen Garne (114) in einem Anteil von 30 % bis 60 % enthält.

2. Nähbares Kunstleder aus thermoplastischem Elastomer (100) gemäß Anspruch 1, wobei das Garn (11) die kurzfaserigen Garne (114) in einem Anteil von 40 % bis 60 % enthält.

3. Nähbares Kunstleder aus thermoplastischem Elastomer (100) gemäß Anspruch 1, wobei die kurzfaserigen Garne (114) durch Spinnen aus kurzen Fasern (110) gebildet sind, wobei die kurzen Fasern (110) natürliche kurze Fasern oder synthetische Stapelfasern sind.

4. Nähbares Kunstleder aus thermoplastischem Elastomer (100) gemäß Anspruch 1, wobei die kurzfaserigen Garne (114) durch Spinnen aus kurzen Fasern (110) gebildet sind, wobei die kurzen Fasern (110) ein nichtpolares Material sind.

5. Nähbares Kunstleder aus thermoplastischem Elastomer (100) gemäß Anspruch 3 oder 4, wobei die kurzen Fasern (110) Polyesterfasern sind.

6. Nähbares Kunstleder aus thermoplastischem Elastomer (100) gemäß einem der Ansprüche 3-5, wobei die kurzen Fasern (110) 15-24 mm lang sind.

7. Nähbares Kunstleder aus thermoplastischem Elastomer (100) gemäß Anspruch 1, wobei die langen Filamente (113) aus synthetischen Fasern oder erneuerbaren Fasern oder anorganischen Fasern durch Spinnen durch Spinndüsen gebildet sind.

8. Nähbares Kunstleder aus thermoplastischem Elastomer (100) gemäß Anspruch 1, wobei die langen Filamente (113) und die die kurzfaserigen Garne (114) durch Z-Zwirnung oder S-Zwirnung miteinander verbunden sind.

9. Nähbares Kunstleder aus thermoplastischem Elastomer (100) gemäß Anspruch 1, wobei die Dicke des Garns (11) 10-32 tex beträgt.

10. Nähbares Kunstleder aus thermoplastischem Elastomer (100) gemäß Anspruch 9, wobei die Dicke des Garns (11) 11-20 tex beträgt.

11. Nähbares Kunstleder aus thermoplastischem Elastomer (100) gemäß Anspruch 1, wobei die Haare (112) 3-8 mm lang sind.

12. Nähbares Kunstleder aus thermoplastischem Elastomer (100) gemäß Anspruch 1, wobei die Haare (112) Endhaare, Schlaufenhaare oder schwimmende Haare sind.

13. Nähbares Kunstleder aus thermoplastischem Elastomer (100) gemäß Anspruch 1, wobei die eine Oberflächenschicht aus thermoplastischem Elastomer (2) und die Grundgewebeschicht (1) durch ein Heißpress-Verbindungsverfahren miteinander verbunden sind.

## Revendications

1. Cuir artificiel d'élastomère thermoplastique pouvant être cousu (100), comprenant une couche de tissu de base (1) et une couche de surface d'élastomère thermoplastique (2), la couche de tissu de base (1) comprenant un nombre de fils (11), le fil (11) ayant un corps de base (111) et des poils s'étendant du corps de base (112) dans la couche de surface d'élastomère thermoplastique (2), le fil comprenant de longs filaments et des fils de fibres courtes qui sont joints ensemble par torsion, et sur la base du nombre total des longs filaments (113) et des fils de fibres courtes (114), le fil (11) contient les fils de fibres courtes (114) en une proportion de 30 % à 60 %.

2. Cuir artificiel d'élastomère thermoplastique pouvant être cousu (100) selon la revendication 1, le fil (11) contenant les fils de fibres courtes (114) en une proportion de 40 % à 60 %.

3. Cuir artificiel d'élastomère thermoplastique pouvant être cousu (100) selon la revendication 1, les fils de fibres courtes (114) étant formés à partir de fibres courtes (110) par filage, les fibres courtes (110) étant des fibres courtes naturelles ou des fibres discontinues synthétiques.

4. Cuir artificiel d'élastomère thermoplastique pouvant être cousu (100) selon la revendication 1, les fils de fibres courtes (114) étant formés à partir de fibres courtes (110) par filage, les fibres courtes (110) étant d'un matériau non polaire.

5. Cuir artificiel d'élastomère thermoplastique pouvant être cousu (100) selon la revendication 3 ou 4, les fibres courtes (110) étant des fibres de polyester.

6. Cuir artificiel d'élastomère thermoplastique pouvant être cousu (100) selon l'une quelconque des revendications 3 à 5, les fibres courtes (110) étant d'une longueur de 15 à 24 mm.

7. Cuir artificiel d'élastomère thermoplastique pouvant être cousu (100) selon la revendication 1, les longs filaments (113) étant formés à partir de fibres synthétiques ou de fibres renouvelables ou de fibres inorganiques par filage à la filière.

8. Cuir artificiel d'élastomère thermoplastique pouvant être cousu (100) selon la revendication 1, les longs filaments (113) et les fils de fibres courtes (114) étant joints ensemble par torsion Z ou torsion S.

9. Cuir artificiel d'élastomère thermoplastique pouvant être cousu (100) selon la revendication 1, l'épaisseur du fil (11) étant de 10 à 32 tex.

10. Cuir artificiel d'élastomère thermoplastique pouvant être cousu (100) selon la revendication 1, l'épaisseur du fil (11) étant de 11 à 20 tex.

11. Cuir artificiel d'élastomère thermoplastique pouvant être cousu (100) selon la revendication 1, les poils (112) étant d'une longueur de 3 à 8 mm.

12. Cuir artificiel d'élastomère thermoplastique pouvant être cousu (100) selon la revendication 1, les poils (112) étant des poils d'extrémité, des poils à boucle ou des poils flottants.

13. Cuir artificiel d'élastomère thermoplastique pouvant être cousu (100) selon la revendication 1, la couche de surface d'élastomère thermoplastique (2) et la couche de tissu de base (1) étant liées ensemble par un procédé de jointure par pressage à chaud.
